# FASCICULE DE BREVET EUROPEEN

(11) **EP 0 705 727 B1**
(45) Date de publication et mention de la délivrance du brevet: **11.06.1997**
(21) Numéro de dépôt: 95402189.5
(22) Date de dépôt: 29.09.1995
(51) Int. Cl.: B60N 2/22

(54) **Articulations pour dossier de siège de véhicule**
Gelenkebeschlag für eine Fahrzeugsitzrückenlehne
Articulation for the backrest of a vehicle seat

(30) Priorité: 03.10.1994 FR 9411788
(43) Date de publication de la demande: 10.04.1996
(73) Titulaire: BERTRAND FAURE EQUIPEMENTS S.A., 92100 Boulogne (FR)
(72) Inventeur: Baloche, François, F-61100 Flers (FR); Couasnon, Christian, F-61100 Flers (FR)
(74) Mandataire: Burbaud, Eric

(56) Documents cités:
- EP-A- 0 082 418
- DE-A- 3 319 593
- US-A- 3 953 069
- US-A- 4 615 551
- US-A- 4 995 669

## Description

L'invention est relative aux dispositifs d'articulation des dossiers de sièges avant de véhicules rendant possibles, d'une part, un réglage fin d'inclinaison pour les positions d'assise normales et, d'autre part, un rabattement du dossier vers l'avant avec possibilité de retour ultérieur en sa position angulaire préréglée, en vue notamment d'améliorer l'accessibilité des places arrière du véhicule concerné (voir par exemple US-A-4 995 669).

Elle vise plus particulièrement, parmi ces dispositifs d'articulation, ceux qui comprennent :
- d'un côté au moins du siège, un mécanisme de verrouillage angulaire du dossier comportant un verrou mobile, une embase solidarisable avec l'assise et présentant une encoche de réception du verrou et un ressort de rappel pour solliciter constamment le verrou vers l'encoche,
- un organe de commande, dit "manette" ci-après, monté sur le dossier et propre à commander les dégagements de chaque verrou hors de son encoche, à l'encontre de l'effort de rappel du ressort correspondant,
- de chaque côté du siège, un mécanisme de réglage discontinu de l'inclinaison du dossier, comportant un flasque lié à l'assise muni d'une couronne guidant un ou plusieurs pions ou grains, un flasque muni d'une couronne dentée intérieurement, flasque solidarisé avec l'embase du mécanisme de verrouillage situé du même côté du siège, une came montée rotative autour de l'axe commun des deux couronnes, au moins un grain denté monté de façon à pouvoir coulisser radialement dans le flasque lié à l'assise et propre à coopérer avec la came et avec la couronne dentée du flasque lié à l'embase, et un ressort de rappel sollicitant la came vers sa position angulaire de blocage,
- et un organe de commande rotatif, dit "poignée" ci-après, facilement actionnable par l'usager assis sur le siège et propre à commander simultanément les rotations des cames des deux mécanismes de réglage.

Dans les modes de réalisation connus de ces articulations,
- il est prévu un mécanisme de verrouillage angulaire avec verrou et encoche de chaque côté du siège,
- les deux cames des mécanismes de réglage sont solidarisées en permanence en rotation par un arbre transversal.

Avec de telles articulations, il est possible de libérer angulairement le dossier par rapport à l'assise :
- soit, pour son rabattement vers l'avant, en actionnant la manette, ce qui dégage simultanément les deux verrous de leurs encoches en désolidarisant angulairement les montures des embases correspondantes,
- soit, pour le réglage fin ou "de confort" de l'inclinaison du dossier, en actionnant la poignée, ce qui dégage radialement, dans chacun des deux mécanismes de réglage, les grains dentés des couronnes dentées en déplaçant ces grains vers l'axe de ces couronnes, ce qui désolidarise angulairement chaque flasque lié au dossier par rapport au flasque lié à l'assise.

Ces articulations donnent toute satisfaction tant que les deux types de libération angulaire mentionnés ci-dessus sont mis en oeuvre séparément.

S'ils sont mis en oeuvre simultanément, c'est-à-dire si la manette et la poignée sont actionnés en même temps, chaque ensemble intermédiaire constitué par une embase et le flasque de dossier solidarisé avec elle est libéré angulairement à la fois par rapport à l'assise et par rapport au dossier : cet ensemble est alors monté fou entre ces deux composants du siège.

Dans ces conditions, il est possible que, en raison des différences de frottement locales, l'un de ces deux ensembles intermédiaires soit déplacé angulairement par rapport à l'autre.

Lorsque les deux organes de commande sont ensuite lâchés, le retour des grains dentés en leurs positions d'engrènement assure à nouveau une bonne solidarisation angulaire de chaque flasque de dossier par rapport au flasque d'assise correspondant.

Mais, dans l'hypothèse explicitée ci-dessus où l'un des deux ensembles intermédiaires a été décalé angulairement par rapport à l'autre, la solidarisation angulaire monture-embase n'est réalisée que pour celui, de ces deux ensembles, pour lequel l'encoche se présente en premier regard du verrou correspondant, au cours du retour du dossier en sa position préréglée initiale.

La chaîne complète de solidarisation assise-dossier est alors réalisée du côté du siège qui comporte ledit ensemble, mais elle ne l'est pas de l'autre côté, pour lequel il manque le maillon embase-monture.

En d'autres termes, la solidité de la solidarisation angulaire assise-dossier est alors fortement amoindrie et même quasiment divisée par deux.

Le but principal de l'invention est de remédier à cet inconvénient.

A cet effet, un dispositif d'articulation du genre ci-dessus est essentiellement caractérisé selon l'invention en ce que le mécanisme de verrouillage angulaire est unique et en ce que l'arbre reliant les cames des deux mécanismes de réglage est décomposé en deux tronçons coaxiaux angulairement mobiles l'un par rapport à l'autre, ces deux tronçons étant solidarisés respectivement avec les deux cames et avec deux leviers radiaux propres à prendre appui angulairement l'un contre l'autre dans un seul sens, savoir un premier levier solidarisé avec le tronçon qui se trouve du côté du mécanisme de verrouillage et un second levier solidarisé avec l'autre tronçon, un point excentré du second levier étant relié au verrou du mécanisme de verrouillage par un câble, l'ensemble étant agencé de façon telle :
- que l'actionnement de la poignée de réglage confort dans le sens du déblocage du mécanisme de réglage dont la came est solidaire de la poignée ait pour effet de débloquer aussi l'autre mécanisme de réglage par poussée angulaire du premier levier contre le second levier, le retour de la poignée en sa position d'origine se traduisant automatiquement par le retour des deux mécanismes en leur position de blocage du fait des rappels élastiques associés aux cames de ces deux mécanismes,
- et que l'actionnement de la manette de rabattement vers l'avant dans le sens du dégagement du verrou hors de son encoche ait pour effet de faire tourner le second levier dans le même sens que précédemment, correspondant au déblocage du second mécanisme de réglage, le relâchement de la manette se traduisant par un retour élastique du verrou dans son encoche dès que les positions angulaires de ce verrou et de cette encoche coïncident à nouveau, et par un retour du second mécanisme de réglage en sa position de blocage par suite du rappel élastique angulaire de la came comprise par ce mécanisme en sa position initiale.

Dans des modes de réalisation préférés, on a recours en outre à l'une et/ou à l'autre des dispositions suivantes :
- les deux tronçons constitutifs de l'arbre de commande des deux mécanismes de réglage comprennent deux bouts emmanchés l'un dans l'autre de façon angulairement coulissante,
- la zone de liaison des deux tronçons constitutifs de l'arbre de commande des deux mécanismes de réglage est disposée axialement à proximité immédiate du mécanisme de réglage dont la came est solidaire de la poignée,
- le premier levier est constitué par une plaquette se rétrécissant vers son extrémité la plus éloignée de l'axe de l'arbre à la façon d'une aiguille d'horloge et le second levier est également réalisé par une plaquette allongée s'étendant diamétralement de part et d'autre de l'axe, plaquette dont une extrémité est accrochée au câble et dont l'autre extrémité est prolongée par un rebord rabattu à 90° propre à buter angulairement contre le premier levier,
- le câble est accroché au second levier par l'intermédiaire d'un ressort.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation préférés de l'invention en se référant aux dessins ci-annexés d'une manière bien entendu non limitative.

La figure 1, de ces dessins, est une vue générale en plan, portions coupées, d'un dispositif d'articulation conforme à l'invention.

La figure 2 est une vue latérale du même dispositif selon la flèche II de la figure 1.

La figure 3 est une coupe partielle dudit dispositif selon la flèche III de la figure 1.

La figure 4 montre semblablement à la figure 1 une variante de dispositif d'articulation également conforme à l'invention.

D'une façon générale, on se propose de monter pivotant autour d'un axe horizontal X lié à l'assise fixe 1 d'un siège avant de véhicule, le dossier 2 de ce siège de façon telle :
- que, d'une part, les inclinaisons de ce dossier pour les positions normales d'assise soient réglables dans une gamme angulaire,
- et que, d'autre part, ledit dossier puisse être rabattu facilement vers l'avant de façon à dégager l'accessibilité des places arrière du véhicule, avec possibilité de retour ultérieur en son inclinaison préréglée, ce qui est particulièrement précieux pour les véhicules comprenant seulement une porte de chaque côté.

A cet effet, d'une façon connue en soi, on fait comprendre au dispositif d'articulation deux mécanismes de réglage discontinu d'inclinaison A et B, disposés respectivement des deux côtés du siège et un mécanisme C de verrouillage monté sur l'un des montants du dossier, supposé ici à titre d'exemple être celui disposé du côté de la porte du véhicule livrant accès au siège arrière.

Chacun des mécanismes de réglage A et B comprend :
- un flasque 3A, 3B lié à l'assise 1,
- et un flasque de dossier 4A, 4B solidarisé directement ou non, comme il sera précisé ci-après, avec l'ossature du dossier 2, chaque flasque d'assise formant avec le flasque de dossier correspondant et avec un anneau de sertissage approprié 5A, 5B un boîtier circulaire, avec possibilité de rotation guidée à glissement doux du flasque de dossier le long du flasque d'assise.

Deux couronnes indexées intérieurement et admettant pour axe l'axe X sont prévues respectivement dans chacun des deux flasques composant chaque boîtier.

Chaque boîtier comprend une came montée rotative autour de l'axe X et solidarisée avec un tronçon d'arbre 6A, 6B qui traverse le boîtier de part en part.

Des grains ou pions dentés 7A, 7B sont montés de façon à pouvoir coulisser radialement dans des guides évidés dans chaque flasque d'assise, les commandes de ces coulissements étant assurées par les cames. Lesdits grains sont de préférence au nombre de trois, décalés angulairement de 120° autour de l'axe X. Les dentures de ces grains sont propres à coopérer avec la couronne dentée de l'un des deux flasques de façon telle que, lorsque lesdits grains se trouvent en leurs positions radiales les plus éloignées de l'axe X, leur mise en prise avec les deux couronnes assure une solidarisation angulaire de celles-ci, et qu'au contraire, lorsqu'ils se trouvent en leurs positions les plus proches de l'axe, les dentures en regard soient suffisamment écartées l'une de l'autre pour que les deux flasques soient désolidarisés angulairement l'un de l'autre.

L'arbre 6A est solidarisé avec une poignée 8 qui est facilement accessible de l'usager du siège en sa position assise sur ce siège.

En outre au moins un ressort est prévu pour solliciter constamment la came de chaque mécanisme ainsi que les organes dont elle est solidaire vers leur position angulaire de repos, correspondant à l'engrènement des grains dentés dans les couronnes en regard, c'est-à-dire au blocage de l'articulation.

D'une façon également connue en soi, l'un des flasques 4A n'est pas solidarisé en permanence avec l'armature du dossier 2.

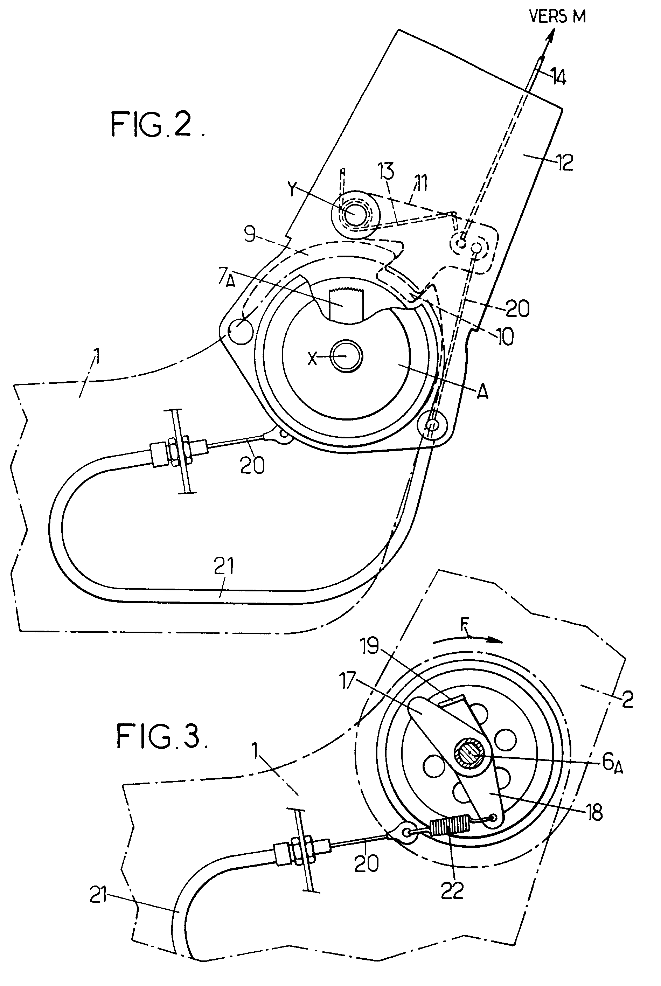

Ce flasque 4A est solidarisé avec une embase 9 évidée par une encoche 10 (figure 2) qui est propre à recevoir de façon amovible un verrou 11 lui-même porté par une monture 12 solidaire de ladite ossature du dossier 2.

Le verrou 11 est avantageusement constitué par le bec d'un crochet monté pivotant autour d'un axe Y lié à l'ossature du dossier et parallèle à l'axe X, crochet sollicité angulairement dans le sens correspondant à son introduction dans l'encoche 10 par un ressort de torsion 13.

Une tringle 14 relie le crochet 11 à une petite manette de commande (non représentée mais symbolisée par la référence M) monté sur le dossier 2, en un point haut de son flanc situé du côté de la porte d'accès correspondante.

Dans les modes de réalisation connus des articulations mettant en application les dispositions ci-dessus décrites,
- les deux arbres 6A et 6B solidarisés respectivement avec les cames des deux mécanismes de réglage A et B sont eux-mêmes solidaires entre eux en permanence, de sorte que la poignée 8 peut commander simultanément les déblocages de ces deux mécanismes,
- on trouve sur chacun des deux côtés du siège un ensemble embase 9-monture 12 comprenant un crochet 11 sollicité élastiquement vers une encoche 10 et les crochets de ces deux mécanismes de verrouillage sont actionnés tous les deux à partir de la même manette de commande M.

Avec de telles articulations, les libérations angulaires du dossier sont assurées :
- d'une part, par rotation de la poignée 8 pour rendre possibles les réglages fins ou de "confort" de l'inclinaison du dossier en l'une ou l'autre de ses positions d'assise,
- et, d'autre part, par actionnement de la manette M, pour permettre le rabattement du dossier vers sa position avant en vue de faciliter l'accès des places arrière, le retour ultérieur de ce dossier pouvant ensuite être effectué automatiquement en son inclinaison de confort préréglée.

Comme exposé ci-dessus, avec ces modes de réalisation connus, il existe un risque : si les libérations du dossier sont assurées en même temps par des actionnements simultanés de la poignée 8 et de la manette M, les équipages intermédiaires constitués, de chaque côté du dossier, par un flasque 4A, 4B lié au dossier et l'embase de dossier 9 correspondante sont libérés angulairement à la fois par rapport aux flasques 3A, 3B liés à l'assise et par rapport à l'ossature du dossier 2.

Ces équipages intermédiaires sont alors fous et il est très possible que l'un des deux soit, lors des manoeuvres consécutives, décalé angulairement par rapport à l'autre, ce qui se traduit par un décalage angulaire mutuel des deux encoches de réception des verrous.

Le verrouillage ultérieur ne fait alors intervenir que l'un des deux verrous, savoir celui qui se présente en premier devant son encoche lors du retour du dossier vers sa position normale, et il en résulte une insuffisance de la solidarisation angulaire du dossier sur l'assise, cette solidarisation n'étant réalisée que d'un côté de ce dossier.

Cet inconvénient est supprimé par l'ensemble des mesures qui vont maintenant être décrites.

En premier lieu, le mécanisme de verrouillage C, comprenant le verrou et l'encoche, est ici unique et disposé du côté, du dossier, proche de la porte d'accès correspondante du véhicule. Bien entendu, il peut être disposé de l'autre côté du dossier.

En second lieu, les deux arbres 6A et 6B solidarisés respectivement avec les cames d'actionnement des deux mécanismes de réglage A et B ne sont plus maintenant solidaires l'un de l'autre : ils demeurent coaxiaux mais sont montés de façon à pouvoir être déplacés angulairement indépendamment l'un de l'autre.

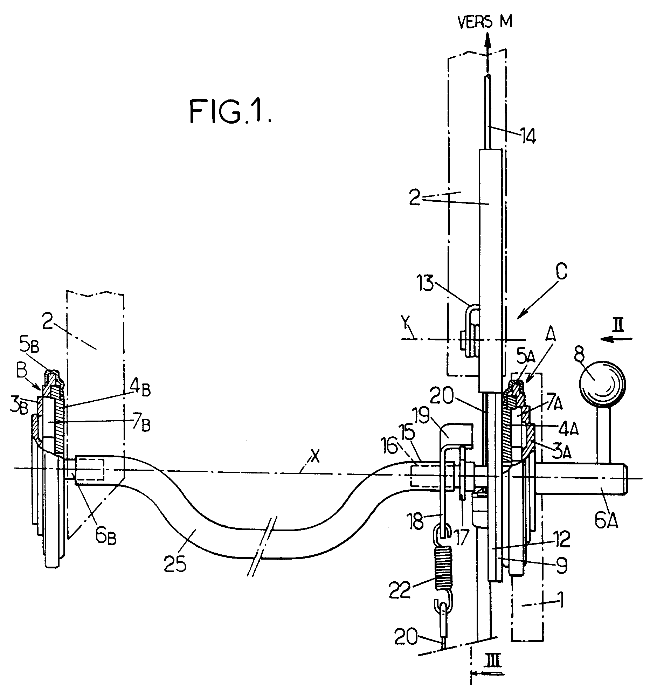

A cet effet, dans le premier mode de réalisation des figures 1 à 3, l'un des deux arbres 6B comprend un embout tubulaire 15 d'axe X qui est emmanché de façon angulairement coulissante sur un doigt cylindrique 16 terminant l'arbre 6A.

En outre,
- l'arbre 6A est solidarisé avec un premier levier 17,
- et l'embout tubulaire 15 est solidarisé avec un second levier 18 propre à prendre appui angulairement contre le levier 17 pour un seul sens de ses rotations autour de l'axe X.

Dans le mode de réalisation illustré, le premier levier 17 est constitué par une plaquette allongée radialement en se rétrécissant vers son extrémité la plus éloignée de l'axe à la façon d'une aiguille d'horloge et le second levier 18 est également une plaquette allongée s'étendant de part et d'autre de l'axe X et comportant à l'une de ses extrémités un pan 19 rabattu à 90° et propre à venir buter angulairement contre l'extrémité libre du premier levier 17.

L'extrémité, du second levier 18, opposée au pan rabattu 19 est reliée à l'extrémité du crochet 11 par un câble inextensible 20 logé sur sa plus grande longueur dans une gaine 21 dont les extrémités sont fixées respectivement sur l'ossature de l'assise 1 et sur l'ossature du dossier 2.

Les positions angulaires respectives des deux leviers 17 et 18 autour de l'axe X sont choisies de façon telle que, au repos, ces deux leviers soient en contact angulairement l'un contre l'autre et que la rotation de la poignée 8 dans le sens correspondant au déblocage du mécanisme de réglage A ait pour effet de faire repousser angulairement sans jeu le second levier 18 par le premier levier 17, et donc d'entraîner l'arbre 6B dans le sens (flèche F sur la figure 3) correspondant au déblocage du mécanisme de réglage B.

Pour ce qui est de l'accrochage du câble 20, il est prévu de façon telle que le dégagement du crochet 11 en dehors de son encoche 10 ait également pour effet de déplacer le second levier 18 dans le sens de la flèche F qui correspond au déblocage du mécanisme de réglage B.

On voit en outre sur les figures 1 et 3, entre le levier 18 et le câble 20, un petit ressort 22 qui absorbe la différence de courbe angulaire des leviers 11 et 18.

Le fonctionnement du dispositif d'articulation qui vient d'être décrit est le suivant.

Pour libérer angulairement le dossier en vue d'un réglage fin ou de "confort" de son inclinaison, il suffit d'actionner la poignée 8 dans le sens du déblocage du mécanisme de réglage A : cet actionnement a pour effet de débloquer en même temps le mécanisme de réglage B du fait de l'entraînement de l'arbre 6B à partir de l'arbre 6A par contact direct du levier 17 contre le levier 18.

Cette libération angulaire du dossier est mise à profit par l'usager du siège pour régler l'inclinaison du dossier par simple pression de son dos contre ce dossier, à l'encontre de l'effort antagoniste d'un fort ressort de rappel.

Lorsque la poignée 8 retourne ensuite à sa position initiale, les rappels élastiques des ressorts associés aux cames des deux mécanismes assurent à nouveau les crantages des grains de ces deux mécanismes avec les couronnes dentées en regard, ce qui assure un nouveau blocage de chacun de ces deux mécanismes pour la nouvelle inclinaison réglée du dossier.

Si l'on désire rabattre le dossier 2 vers l'avant, il suffit d'agir sur la manette M, ce qui a pour double effet :
- de dégager le crochet 11 de son encoche 10,
- et de débloquer le mécanisme de réglage B par suite de l'entraînement en rotation de l'arbre 6B à la suite de la traction exercée par le câble 20 sur le second levier 18.

Le dossier 2 peut alors être rabattu vers l'avant.

Le retour subséquent de la manette M en sa position de repos initiale se traduit par une nouvelle introduction élastique du crochet 11 dans son encoche 10 dès que, au cours du retour angulaire du dossier vers l'arrière, ledit crochet est revenu dans la même position angulaire que ladite encoche.

Le lâcher du câble 20 qui résulte de cette nouvelle introduction rend possible un retour élastique de la came du mécanisme B en sa position initiale, ce qui assure à nouveau la solidarisation angulaire du dossier des deux côtés de celui-ci.

Enfin, si la poignée 8 et la manette M sont actionnées simultanément, on observe les déblocages ou déverrouillages simultanés de chacun des trois mécanismes A, B et C et, lors des retours subséquents de ces deux organes 8 et M en leur position initiale, on observe les nouveaux blocages de ces trois mécanismes selon exactement les processus qui viennent d'être décrits.

En particulier, le nouveau verrouillage correspondant au retour de la manette M en sa position de repos fait nécessairement intervenir une réintroduction du crochet 11 dans son encoche 10, à laquelle réintroduction est asservi un nouveau blocage du mécanisme de réglage B.

Le risque d'observer une absence totale de crantage ou verrouillage de l'un des deux côtés du siège n'existe plus puisque l'on ne compte plus désormais ici sur la réintroduction d'un second crochet du type du crochet 11 dans son encoche, encoche qui aurait pu être malencontreusement décalée angulairement par rapport à l'encoche 10 ci-dessus.

Par conséquent, dans tous les cas, on observe une solide fixation angulaire des deux côtés du dossier 2 sur l'assise 1 lors des retours des deux organes de commande 8 et M en leur position de repos, même si ces deux organes ont été actionnés simultanément.

Cette observation peut également s'exprimer comme suit :
- le mécanisme de réglage B le plus éloigné de la poignée 8 est commandé non seulement pour chaque actionnement de cette poignée 8, mais aussi pour chaque actionnement de la manette M, et ce aussi bien dans le sens du déblocage que dans celui du reblocage consécutif : on est donc sûr que ce mécanisme B est à nouveau "cranté" à la fin de tout actionnement de l'un ou l'autre de ces deux organes, même si ces derniers sont actionnés en même temps,
- comme par ailleurs chacun des mécanismes A et C disposés du côté de la poignée est correctement rebloqué à la fin de l'actionnement de l'organe de commande associé 8 ou M, la solidarisation mécanique du dossier avec l'assise est également assurée dans tous les cas dudit côté du dossier où se trouve la poignée.

Dans le mode de réalisation qui a été décrit en référence aux figures 1 à 3, l'emmanchement mutuel des deux arbres 6A et 6B matérialisé par l'embout 15 et le doigt 16, ainsi que le couple correspondant de leviers 17, 18, sont situés axialement à proximité immédiate du mécanisme de réglage A proche de la poignée 8.

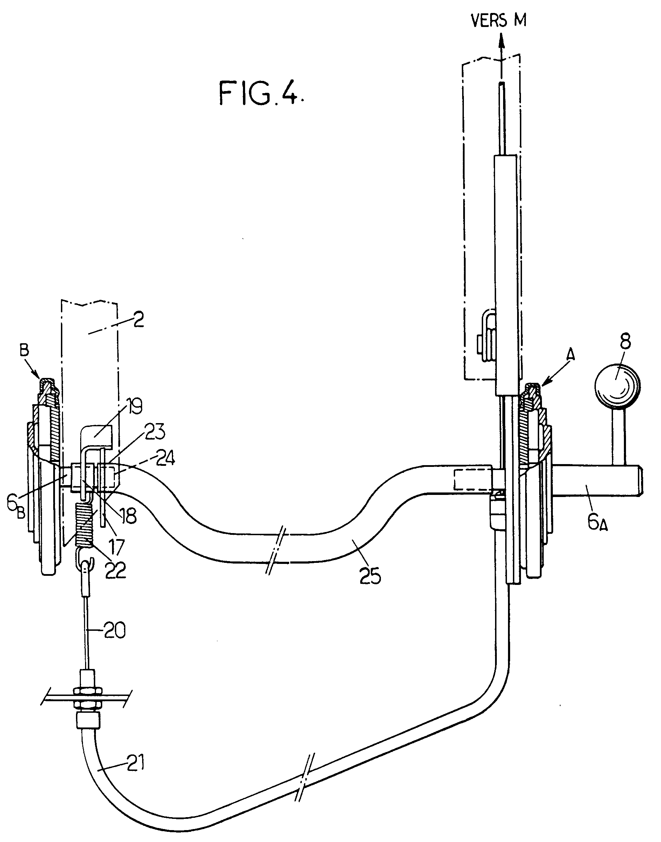

Dans une variante qui a été illustrée sur la figure 4, cet emmanchement 15, 16 et ces leviers 17, 18 sont disposés à proximité immédiate de l'autre mécanisme de réglage B.

Dans cette variante, l'emmanchement mutuel des deux arbres 6A et 6B fait intervenir un embout tubulaire 23 qui est solidarisé en rotation avec l'arbre 6A et un doigt cylindrique intérieur 24 solidarisé avec l'arbre 6B. En outre le premier levier 17 est solidarisé avec l'embout 23 et le second levier 18, 19, avec le doigt 24.

Plus précisément, un tronçon tubulaire 25, qui peut éventuellement être replié en U comme illustré pour des raisons d'encombrement, est emmanché à ses deux extrémités sur des doigts cylindriques terminant les deux arbres 6A et 6B et une solidarisation par soudure est assurée avec un seul de ces deux doigts, savoir celui de l'arbre 6B dans le cas de la figure 1 et celui de l'arbre 6A dans le cas de la figure 4.

En suite de quoi et quel que soit le mode de réalisation adopté, on dispose finalement d'une articulation de dossier de siège de véhicule dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes (pourvu qu'elles rentrent dans le cadre de l'invention tel que défini par les revendications), notamment celles où l'extrémité, du câble 20, la plus éloignée du levier 18 serait accrochée, non pas directement au verrou 11, mais à une pièce liée à ce verrou, telle que la tringle 14 ou même la manette M.

## Revendications

1. Dispositif d'articulation de dossier de siège avant de véhicule rendant possibles, d'une part, un réglage fin d'inclinaison pour les positions d'assise normales et, d'autre part, un rabattement du dossier vers l'avant avec possibilité de retour ultérieur en sa position angulaire préréglée, comprenant :
- d'un côté au moins du siège, un mécanisme (C) de verrouillage angulaire du dossier (2) comportant un verrou mobile (11), une embase (9) solidarisable avec l'assise (1) et présentant une encoche (10) de réception du verrou et un ressort de rappel (13) pour solliciter constamment le verrou vers l'encoche,
- un organe de commande (M), dit "manette" ci-après, monté sur le dossier et propre à commander le dégagement du verrou hors de son encoche, à l'encontre de l'effort de rappel du ressort correspondant,
- de chaque côté du siège, un mécanisme (A, B) de réglage discontinu de l'inclinaison du dossier, comportant un flasque (3A, 3B) lié à l'assise muni d'une couronne guidant un ou plusieurs grains, un flasque (4A, 4B) muni d'une couronne dentée intérieurement, flasque solidarisé avec l'embase (9) du mécanisme de verrouillage situé du même côté du siège, une came montée rotative autour de l'axe commun (X) des deux couronnes, au moins un grain denté (7A, 7B) monté de façon à pouvoir coulisser radialement dans le flasque lié à l'assise et propre à coopérer avec la came et avec la couronne dentée, et un ressort de rappel sollicitant la came vers sa position angulaire de blocage,
- et un organe de commande rotatif (8), dit "poignée" ci-après, facilement actionnable par l'usager assis sur le siège et propre à commander simultanément les rotations des cames des deux mécanismes de réglage,
caractérisé en ce que le mécanisme (C) de verrouillage angulaire est unique et en ce que l'arbre reliant les cames des deux mécanismes de réglage (A, B) est décomposé en deux tronçons coaxiaux (6A, 6B) angulairement mobiles l'un par rapport à l'autre, ces deux tronçons étant solidarisés respectivement avec les deux cames et avec deux leviers radiaux propres à prendre appui angulairement l'un contre l'autre dans un seul sens, savoir un premier levier (17) solidarisé avec le tronçon (6A) qui se trouve du côté du mécanisme de verrouillage (C) et un second levier (18) solidarisé avec l'autre tronçon, un point excentré du second levier étant relié au verrou (11) du mécanisme de verrouillage par un câble (20), l'ensemble étant agencé de façon telle :
- que l'actionnement de la poignée (8) dans le sens du déblocage du mécanisme de réglage (A) dont la came est solidaire de la poignée ait pour effet de débloquer aussi l'autre mécanisme de réglage (B) par poussée angulaire du premier levier (17) contre le second levier (18), le retour de la poignée en sa position d'origine se traduisant automatiquement par le retour des deux mécanismes en leur position de blocage du fait des rappels élastiques associés aux cames de ces deux mécanismes,
- et que l'actionnement de la manette (M), dans le sens du dégagement du verrou (11) hors de son encoche (10), ait pour effet de faire tourner le second levier (18) dans le même sens que précédemment, correspondant au déblocage du second mécanisme de réglage (B), le relâchement de la manette se traduisant par un retour élastique du verrou dans son encoche dès que les positions angulaires de ce verrou et de cette encoche coïncident à nouveau, et par un retour du second mécanisme de réglage en sa position de blocage par suite du rappel élastique angulaire de la came comprise par ce mécanisme en sa position initiale.

2. Dispositif d'articulation selon la revendication 1, caractérisé en ce que les deux tronçons (6A, 6B) constitutifs de l'arbre de commande des deux mécanismes de réglage, comprennent deux bouts (16,15 ; 23,24) emmanchés l'un dans l'autre de façon angulairement coulissante.

3. Dispositif d'articulation selon l'une quelconque des revendications 1 et 2, caractérisé en ce que la zone de liaison des deux tronçons constitutifs de l'arbre de commande des deux mécanismes de réglage est disposée axialement à proximité immédiate du mécanisme de réglage (A) dont la came est solidaire de la poignée (8).

4. Dispositif d'articulation selon l'une quelconque des revendications précédentes, caractérisé en ce que le premier levier (17) est constitué par une plaquette se rétrécissant vers son extrémité la plus éloignée de l'axe de l'arbre à la façon d'une aiguille d'horloge et en ce que le second levier (18) est également réalisé par une plaquette allongée s'étendant diamétralement de part et d'autre de l'axe, plaquette dont une extrémité est accrochée au câble (20) et dont l'autre extrémité est prolongée par un rebord (19) rabattu à 90° propre à buter angulairement contre le premier levier.

5. Dispositif d'articulation selon l'une quelconque des revendications précédentes, caractérisé en ce que le câble (20) est accroché au second levier (18) par l'intermédiaire d'un ressort (22).

## Claims

1. A hinge device for the back of a vehicle front seat making it possible firstly to adjust its inclination finely for normal sitting positions and secondly to tilt the back down forwards with the possibility of subsequently returning to its preadjusted angular position, the device comprising:
• on at least one side of the seat, an angular locking mechanism (C) for locking the back (2) and comprising a moving latch (11), a base (9) suitable for being secured to the seat proper (1) and having a notch (10) for receiving the latch, and a return spring (13) for continuously urging the latch towards the notch;
• a control member (M) referred to below as a "knob" mounted on the back and suitable for causing the latch to be disengaged from its notch against the return force of the corresponding return spring;
• on both sides of the seat, a respective adjustment mechanism (A, B) for discontinuous adjustment of the inclination of the back, each mechanism comprising a cheekplate (3A, 3B) connected to the seat proper and provided with a ring guiding one or more slugs, a cheekplate (4A, 4B) provided with an internally toothed ring, which cheekplate is secured to the base (9) of the locking mechanism situated on the same side of the seat, a cam mounted to rotate about the common axis (X) of the two rings, at least one toothed slug (7A, 7B) mounted so as to be capable of sliding radially in the cheekplate connected to the seat proper and suitable for co-operating with the cam and with the toothed ring, and a return spring urging the cam towards its angular locking position; and
• a rotary control member (8) referred to below as a "handle", that is easily actuated by a user sitting on the seat and that is suitable for causing the cams of both adjustment mechanisms to rotate simultaneously;
the device being characterized in that there is only one angular locking mechanism (C) and in that the shaft connecting together the cams of the two adjustment mechanisms (A, B) is made up of two colinear lengths (6A, 6B) that are capable of moving angularly relative to each other, these two lengths being secured to the two respective cams and to two radial levers suitable for bearing angularly against each other in one direction only, and comprising a first lever (17) secured to the length (6A) that is on the same side as the locking mechanism (C), and a second lever (18) that is secured to the other length, an off-center point on the second lever being connected to the latch (11) of the locking mechanism by a cable (20), the assembly being organized in such a manner that:
• actuating the handle (8) in the direction for unlocking the adjustment mechanism (A) whose cam is secured to the handle has the effect of also unlocking the other adjustment mechanism (B) by angular thrust of the first lever (17) against the second lever (18), return of the handle to its original position giving rise automatically to return of both mechanisms to their locking positions because of the resilient return means associated with the cams of the two mechanisms; and
• actuating the knob (M) in the direction for disengaging the latch (11) from its notch (10) has the effect of causing the second lever (18) to rotate in the same direction as before, corresponding to unlocking the second adjustment mechanism (B), release of the knob giving rise to resilient return of the latch into its notch as soon as the angular positions of the latch and of the notch coincide again, and by the second adjustment mechanism returning to its locking position because of the resilient angular return of the cam in said mechanism to its initial position.

2. A hinge device according to claim 1, characterized in that the two lengths (6A, 6B) making up the control shaft of the two adjustment mechanisms comprise respective endpieces (16, 15; 23, 24) engaged one in the other in such a manner as to allow mutual angular sliding.

3. A hinge device according to any one of claims 1 and 2, characterized in that the connection zone between the two component lengths of the control shaft of the two adjustment mechanisms is axially disposed in the immediate vicinity of the adjustment mechanism (A) whose cam is secured to the handle (8).

4. A hinge device according to any one of the preceding claims, characterized in that the first lever (17) is constituted by a plate that tapers towards its end further from the axis of the shaft like a hand of a clock, and in that the second lever (18) is likewise constituted by an elongate plate extending diametrically on either side of the axis, which plate has one end connected to the cable (20) and its other end extended by a tab (19) extending at 90° thereto and suitable for coming into angular abutment against the first lever.

5. A hinge device according to any one of the preceding claims, characterized in that the cable (20) is connected to the second lever (18) via a spring (22).

## Patentansprüche

1. Gelenkvorrichtung für eine Rückenlehne eines Fahrzeugvordersitzes, mit der einerseits eine Feineinstellung der Neigung für normale Sitzpositionen und andererseits ein Umklappen der Rückenlehne nach vorne mit Möglichkeit der späteren Rückkehr in ihre voreingestellte Winkelposition möglich ist, mit:
- an wenigstens einer Seite des Sitzes einem Winkelverriegelungsmechanismus (C) der Rückenlehne (2) mit einem beweglichen Riegel (11), einer mit der Sitzfläche (1) verbindbaren Grundplatte (9), die eine Kerbe (10) zum Aufnehmen des Riegels aufweist und einer Rückstellfeder (13) zum ständigen Beaufschlagen des Riegels in Richtung der Kerbe,
- einem Steuerorgan (M), im folgenden als "Bedienungshebel" bezeichnet, das an der Rückenlehne montiert ist und geeignet ist, die Entfernung des Riegels aus seiner Kerbe entgegen der Rückstellkraft der entsprechenden Feder zu steuern,
- an jeder Seite des Sitzes einem Mechanismus (A, B) zum diskontinuierlichen Einstellen der Neigung der Rückenlehne, mit einem mit der Sitzfläche verbundenen Flansch (3A, 3B), der mit einem Kranz versehen ist, der ein oder mehrere Paßstücke führt, einem Flansch (4A, 4B), der innen mit einem Zahnkranz versehen ist und fest mit der Grundplatte (9) des auf derselben Seite des Sitzes angeordneten Verriegelungsmechanismus verbunden ist, einem um die gemeinsame Achse (X) der zwei Kränze drehbar montierten Nocken, wenigstens einem gezahnten Paßstück (7A, 7B), das in dem mit der Sitzfläche verbundenen Flansch radial gleitbeweglich montiert und eingerichtet ist, um mit dem Nocken und dem Zahnkranz zusammenzuwirken, und einer Rückholfeder, die den Nocken in seine Blockier-Winkelposition beaufschlagt,
- und einem Drehsteuerorgan (8) nachfolgend als "Handgriff" bezeichnet, das durch den auf dem Sitz sitzenden Benutzer leicht betätigt werden kann und eingerichtet ist, um gleichzeitig die Drehungen der Nocken der zwei Einstellmechanismen zu steuern,
**dadurch gekennzeichnet, daß** der Verriegelungsmechanismus (C) nur einmal vorhanden ist und daß die Welle, die die Nocken der zwei Einstellmechanismen (A, B) verbindet, in zwei gegeneinander winkelbewegliche koaxiale Abschnitte (6A, 6B) zerlegt ist, die jeweils mit den zwei Nocken und zwei radialen Hebeln fest verbunden sind, die eingerichtet sind, um in nur einer Drehrichtung gegeneinanderzudrücken, nämlich einem ersten Hebel (17), der mit dem auf der Seite des Verriegelungsmechanismus (C) befindlichen Abschnitt (6A) fest verbunden ist, und einem zweiten Hebel (18), der mit dem anderen Abschnitt fest verbunden ist, wobei ein exzentrischer Punkt des zweiten Hebels mit dem Riegel (11) des Verriegelungsmechanismus über ein Kabel (20) verbunden ist und die Anordnung so ausgelegt ist, daß:
- die Betätigung des Handgriffs (8) in Entblockierrichtung des Einstellmechanismus (A), dessen Nocken mit dem Handgriff fest verbunden ist, die Wirkung hat, daß auch der andere Einstellmechanismus (B) durch Winkeldruck des ersten Hebels (17) gegen den zweiten Hebel (18) entblockiert wird, wobei die Rückkehr des Handgriffs in seine ursprüngliche Position aufgrund der mit den Nocken dieser Mechanismen verbundenen Rückstellkräfte automatisch zur Rückkehr dieser zwei Mechanismen in ihre Blockierposition führt,
- und die Betätigung des Bedienungshebels (M) in Richtung der Entfernung des Riegels (11) aus seiner Kerbe (10) die Wirkung hat, daß der zweite Hebel (18) in demselben Sinn wie zuvor gedreht wird, der der Entblockierung des zweiten Einstellmechanismus (B) entspricht, wobei das Loslassen des Bedienungshebels dazu führt, daß der Riegel elastisch in seine Kerbe zurückkehrt, sobald die Winkelpositionen dieses Riegels und dieser Kerbe von neuem zusammenfallen, und infolge der elastischen Winkelrückstellung des in diesem Mechanismus enthaltenen Nockens in seine ursprüngliche Position der zweite Einstellmechanismus in seine Blockierposition zurückkehrt.

2. Gelenkvorrichtung nach Anspruch 1, dadurch gekennzeichnet, daß die zwei Abschnitte (6A, 6B), die die Steuerwelle der zwei Einstellmechanismen bilden, zwei Enden (16, 15; 23, 24) umfassen, die in Drehrichtung gleitend ineinandergesteckt sind.

3. Gelenkvorrichtung nach einem der Ansprüche 1 und 2, dadurch gekennzeichnet, daß der Verbindungsabschnitt der zwei die Steuerwelle der zwei Einstellmechanismen bildenden Abschnitte axial in unmittelbarer Nähe des Einstellmechanismus (A) angeordnet ist, dessen Nocken mit dem Handgriff (8) fest verbunden ist.

4. Gelenkvorrichtung nach einem der vorhergehenden Ansprüche, dadurch gekennzeichnet, daß der erste Hebel (17) durch eine Platte gebildet ist, die in Art eines Uhrzeigers in Richtung ihres am weitesten von der Achse der Welle entfernten Endes verjüngt ist, und daß der zweite Hebel (18) ebenfalls durch eine längliche Platte gebildet ist, die sich diametral beiderseits der Achse erstreckt und von der ein Ende an das Kabel (20) angehängt ist und das andere Ende durch eine um 90° umgebogene Kante (19) verlängert ist, die eingerichtet ist, um durch Drehung gegen den ersten Hebel zu stoßen.

5. Vorrichtung nach einem der vorhergehenden Ansprüche, dadurch gekennzeichnet, daß das Kabel (20) über eine Feder (22) an den zweiten Hebel (18) angehängt ist.
